# EUROPÄISCHE PATENTANMELDUNG

(11) **EP 2 675 045 A2**
(43) Veröffentlichungstag der Anmeldung: **18.12.2013**
(21) Anmeldenummer: 13171298.6
(22) Anmeldetag: 10.06.2013
(51) Int. Cl.: H02K 7/06

(54) **Verstellvorrichtung**

(30) Priorität: 12.06.2012 DE 102012105077
(71) Anmelder: Kokinetics GmbH, 65830 Kriftel (DE)
(72) Erfinder: Dietz, Horst, 67727 Lohnsfeld (DE)
(74) Vertreter: Weiss, Peter

(57) **Zusammenfassung**

Verstellvorrichtung mit einem Motor (2), einem Stator (3) und einem Rotor (4) sowie einem zwischen dem Stator (3) und dem Rotor (4) angeordneten Drehgleitelement (27.1, 27.2), wobei das Drehgleitelement (27.1, 27.2) im Bereich des Rotors (4) und/oder des Stators (5) aktivierbar ist.

## Beschreibung

Die Erfindung betrifft eine Verstellvorrichtung nach dem Oberbegriff des Anspruchs 1.

### Stand der Technik

Aus dem Stand der Technik sind verschiedene Arten von Verstellvorrichtungen bekannt. Diese Verstellvorrichtungen werden in der Regel dadurch ausser Betrieb gesetzt, dass der vorhandene Antrieb abgestellt wird.

### Aufgabe

Die Aufgabe der vorliegenende Erfindung ist darin zu sehen, dass eine Verstellvorrichtung zur Verfügung gestellt wird, bei der eine Überlastsicherung in der Weise vorhanden ist, dass nicht der Antriebabgestellt wird, sondern Teile der Verstellvorrichtung leerlaufen. Neben der Funktion als Überlastsicherung soll auch eine Möglichkeit des Ausser-Betrieb-Setzens der Verstellvorrichtung erreicht werden, welche unabhängig vom Antrieb bzw. Motor funktioniert.

### Lösung der Aufgabe

Zur Lösung der Aufgabe führen die Merkmale des Anspruchs 1.

In einem bevorzugten Ausführungsbeispiel ist ein Rotor und/oder Stator aktivierbar. Aktivierbar bedeutet in diesem Zusammenhang, dass das Drehgleitelement im Bereich eines Rotors und/oder Stators entweder leerlaufen oder die vom Antrieb erzeugte Energie weitergeben kann. Dies hängt davon ab, ob eine Überlastsicherung oder ein In-Gang-Setzen erreicht werden soll. Die Aktivierung kann hierbei über eine Schalteinrichtung erfolgen.

Ferner ist die Verstellvorrichtung mit der Schalteinrichtung versehen, welche das Drehgleitführungselement in Radialrichtung bewegt, um es in Formschluss und Kraftschluss mit der Drehgleitführungsnut des Drehgleitelementes zu bringen. Im Zustand aktiviert, d.h., das Drehgleitführungselement ist in Form- und Kraftschluss mit der Drehgleitführungsnut, wird die Antriebskraft des Motors über die Spindelstange und das Drehgleitelement auf den Rotor übertragen und in Drehmoment und Winkelgeschwindigkeit transformiert. Im Zustand deaktiviert wird die Antriebskraft des Motors nicht auf den Rotor übertragen, da das Drehgleitführungselement dann mit Hilfe der Schalteinrichtung aus dem Eingriff mit der Drehgleitführungsnut genommen ist. Das Drehgleitelement liegt somit drehbar und verschiebbar in dem Rotor bzw. dem Stator. Hierzu sind eine Innenwand, d.h. eine dem Drehgleitelement zugewandten Seite des Rotors bzw. des Stators, glattwandig ausgebildet.

In einem anderen erfindungsgemässen Ausführungsbeispiel erfolgt die Aktivierung über eine Wirkverbindung einer Rastkugel mit einer Rasthülse.

Die Verstellvorrichtung weist einen Motor als Antrieb, einen Stator sowie einen Rotor in einer ganz oder nur teilweise gekapselten und vor allem uniaxialen Bauweise auf. Dies hat zur Folge, dass noch weniger Bauraum benötigt wird, um die positiven Vorteile der Erfindung zu nutzen. Der uniaxiale Aufbau dieser Verstellvorrichtung erlaubt ferner einen hermetisch dicht gekapselten und sehr kompakten Aufbau von Getriebe und Schwenkantrieb, die bei Bedarf in andere Baukomponenten integriert werden können.

Generell ist als Antrieb einer solchen Verstellvorrichtung der Antrieb zu verstehen, welcher benötigt wird, um über die Verstellvorrichtung ein weiteres Bauteil verstellen bzw. verschwenken können. Als Bauteil kommen hier beispielsweise Rotorblätter, Ruderblätter, Solarspiegel oder dergleichen in Betracht. Die Energie zum Antreiben der Verstellvorrichtung und damit zur Verstellung des Bauteils wird von dem Antrieb zur Verfügung gestellt. Der Antrieb ist bevorzugt ein Elektromotor. Denkbar sind aber auch andere Antriebe, welche ausreichend Energie erzeugen können, die Verstellvorrichtung antreiben zu können.

Die Verstellvorrichtung dient der Übertragung der Energie des Antriebs auf den Rotor, relativ zu dem Stator.

In einem bevorzugten Ausführungsbeispiel ist die Verstellvorrichtung mit Stator und Rotor uniaxial aufgebaut. Eine uniaxiale Anordnung bedeutet in diesem Zusammenhang, dass die Verstellvorrichtung, der Stator, der Rotor und der Antrieb auf derselben Ebene anschliessend aneinander aufgebaut sind. Folglich bilden sie einen einachsigen Aufbau. Uniaxial bezeichnet eine Orientierung der Verstellvorrichtung, des Stators, des Rotors und des Antriebs an einer ungebrochenen Linie und dies ist beispielsweise in Achsrichtung, längsachsig oder achsrecht bezeichnenbar. Vorliegend erfolgt die Ausrichtung entlang der Antriebsachse bzw. der Schwenkachse.

Die Verstellvorrichtung kann mit einem Drehgleitelement mit zumindest zwei Drehgleitgewinden versehen sein, die über ein Aussengewinde mit einem Innengewinde in einer Hülse des Stators und des Rotors in Wirkverbindung stehen. Über eine Spindelstange, welche mit dem Motor verbunden ist, werden die Drehgleitgewinde angetrieben und bewegt, wodurch sich über die Wirkverbindung auch der Stator und der Rotor drehen und so ein Verschwenken des Bauteils erfolgen kann.

In einem bevorzugten Ausführungsbeispiel der vorliegenden Erfindung ist ein Drehgleitelement vorgesehen, welches über ein Innengewinde mit der Spindelstange selbst in Wirkverbindung steht. Das Drehgleitelement ist mit zumindest einer Drehgleitführungsnut versehen, in der zumindest ein Drehgleitführungselement geführt ist, das wiederum an einer dem Drehgleitelement zugewandten Innenseite der Hülse des Stators und des Rotors angeordnet ist. Die Hülsen von Stator und Rotor sind ansonsten innen glatt und ohne Nuten.

Die Drehgleitführungsnuten sind in Form einer Langnut in eine der Innenseite der Hülsen zugewandten Oberfläche des Drehgleitelements eingelassen, sind jedoch nicht bis zu dem Gewinde des Drehgleitelementes durchgebrochen. Durch die Wirkverbindung zwischen Innengewinde des Drehgleitelementes und Aussengewinde der Spindelstange kann das Drehgleitelement auf der Spindelstange axial entlang der Antriebs- bzw. Schwenkachse verschoben werden. Das eine Drehgleitführungselement ist im Bereich des Stators angebracht und das andere Drehgleitführungselement ist im Bereich des Rotors angeordnet. Das eine Drehgleitführungselement steht dabei in Wirkverbindung mit der einen Drehgleitführungsnut im Bereich des Stators und das andere Drehgleitführungselement steht dabei in Wirkverbindung mit der anderen Drehgleitführungsnut im Bereich des Rotors.

Die Steigung der wendelförmig bzw. schraubenförmig verlaufenden Drehgleitführungsnuten kann unterschiedlich sein. Wird das Drehgleitelement axial entlang der Antriebs- bzw. Schwenkachse bzw. der Spindelstange verschoben, so bedeutet dies eine unterschiedliche Drehung des Stators und des Rotors um die Antriebs- bzw. Schwenkachse. Folglich verdreht sich der Rotor relativ zum Stator um den Differenzwinkel der Drehgleitführungsnuten zueinander bzw. voneinander weg. Wenn die beiden Drehgleitführungsnuten gleichsinnig sind, aber unterschiedlich steigend verlaufen, ist es die Differenz der Winkel. Bei gegensinniger Drehrichtung der Drehgleitführungsnuten ist es die Summe der Winkel.

Im Grunde können die Drehgleitführungsnuten jede beliebige Form haben und auch durchgehend unregelmässig kurvig sein. Der Relativwinkel resultiert immer aus dem Differenzwinkel. Die Position des Drehgleitelementes wird durch die Spindelstange eingestellt bzw. durch den Motor, der die Spindelstange um die Antriebs- bzw. Schwenkachse dreht und dabei das Drehgleitelement entlang dieser Antriebs- bzw. Schwenkachse verschiebt.

Bevorzugt ist der Rotor über eine kraftaufnehmende Stabildichtung mit dem Stator verbunden. Diese kraftaufnehmende Stabildichtung führt dazu, dass Biegemomente, welche zwischen dem Stator und dem Rotor auftreten können, abgefedert bzw. vollständig kompensiert werden. Dazu ist die kraftaufnehmende Stabildichtung derart gestaltet, dass sie den Rotor und den Stator zumindest teilweise übergreift. In einem bevorzugten Ausführungsbeispiel umfasst die kraftaufnehmende Stabildichtung auch jeweils ein Dichtelement. Dabei weist der Rotor und der Stator jeweils ein eigenes Dichtelement auf. Die Dichtelemente können entweder fest mit dem Rotor bzw. mit dem Stator verbunden sein. Dies ist nicht zwingend. Es können sich auch um nicht fest mit dem Rotor bzw. dem Stator verbundene Dichtelemente handeln, welche lediglich auf der Oberfläche durch die kraftaufnehmende Stabildichtung gehalten werden.

Das Vorsehen von Dichtelementen auf der Oberfläche des Stators bzw. des Rotors, die von der kraftaufnehmenden Stabildichtung umfasst und positioniert werden, führt dazu, dass gerade bei einer festen Verbindung der Dichtelemente mit dem Rotor bzw. dem Stator Biegemomente besonders gut aufgenommen werden können.

Diese Dichtelemente haben ausserdem die Eigenschaft, dass sie es ermöglichen, dass die kraftaufnehmende Stabildichtung neben der Möglichkeit der Aufnahme von Biegemomenten auch eine Abdichtung zwischen Rotor und Stator ermöglichen.

Die Stabildichtung weist somit nicht näher gekennzeichnete Nuten auf, in die die Dichtungselemente einsetzbar sind. Dadurch wird erreicht, dass eine biegefeste Verbindung zwischen dem Stator und dem Rotor entsteht.

In einem bevorzugten Ausführungsbeispiel der Erfindung ist die Stabildichtung als Hülse ausgebildet. Diese Hülse ist ganz oder teilweise über dem Stator und dem Rotor angeordnet. Durch die Hülse wird mindestens die doppelte Biegefestigkeit und Dichtigkeit der Verstellvorrichtung erreicht. Die Stabildichtung in Form der Hülse umfasst hierbei auf jeden Fall die Verbindungsstelle zwischen dem Rotor und dem Stator und entlastet das Drehgleitelement und die Spindelstange vor zu starken Biegemomenten. Die Hülse kann bei einer festen Verbindung mit dem Rotor auch als Verbindungsglied zu einem Bauteil genutzt werden. Dies bedeutet im Einzelnen, dass beispielsweise ein Rotorblatt direkt auf die Hülse angebracht werden kann. Dadurch wird systematisch die Biegebelastung von der Torsionsbelastung getrennt.

Ferner sind der Stator und der Rotor in einem bevorzugten Ausführungsbeispiel jeweils mit einer Materialabspreizung versehen, welche eine gemeinsame, aufgeweitete Anschlagfläche aufweisen. Auch die Materialabspreizungen sind in eine entsprechende Ausnehmung der Stabildichtung einsetzbar.

Die Verstellvorrichtung schwenkt mit Antrieb des Motors das am Rotor befestigte Bauteil um einen definierten Winkelbereich, beispielsweise um plus minus 90 Grad. Die Verstellvorrichtung wandelt dabei schnelle Motordrehungen um die Antriebsachse in langsame Bewegungen einer Schwenkachse um, wobei bauartbedingt die Antriebsachse und die Schwenkachse zumindest fast, vorliegend jedoch ganz zusammenfallen und meist identisch sind.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Schnittansicht einer erfindungsgemässen Verstellvorrichtung in aktiviertem Zustand;
Figur 2 eine Schnittansicht eines weiteren Ausführungsbeispiels einer erfindungsgemässen Verstellvorrichtung in aktiviertem Zustand;
Figur 3 eine Schnittdarstellung der erfindungsgemässen Verstellvorrichtung nach Figur 2 entlang der Linie III - III;
Figur 4 eine Schnittansicht der erfindungsgemässen Verstellvorrichtung in Figur 2 in deaktiviertem Zustand;
Figur 5 eine Schnittdarstellung der erfindungsgemässen Verstellvorrichtung nach Figur 4 entlang der Linie V - V;
Figur 6 eine Schnittdarstellung eines weiteren Ausführungsbeispiels einer erfindungsgemässen Verstellvorrichtung;
Figur 7 eine Schnittdarstellung der erfindungsgemässen Verstellvorrichtung nach Figur 6 entlang der Linie VII - VII;
Figur 8 eine Schnittdarstellung eines weiteren Ausführungsbeispiels einer erfindungsgemässen Verstellvorrichtung;
Figur 9 eine Schnittdarstellung der erfindungsgemässen Verstellvorrichtung nach Figur 8 entlang der Linie IX - IX;
Figur 10 einen Querschnitt durch eine Rastvorrichtung für eine erfindungsgemässe Verstellvorrichtung;
Figur 11 einen Querschnitt durch die Rastvorrichtung nach Figur 10;
Figur 12 einen Querschnitt durch ein weiteres Ausführungsbeispiel einer Rastvorrichtung für eine erfindungsgemässe Verstellvorrichtung in deaktiviertem Zustand;
Figur 13 einen Querschnitt durch die Rastvorrichtung in Figur 12 in aktiviertem Zustand;
Figur 14 eine Schnittansicht durch ein weiteres Ausführungsbeispiel einer Rastvorrichtung für eine erfindungsgemässe Verstellvorrichtung im Bereich des Stators;
Figur 15 eine Schnittansicht durch ein weiteres Ausführungsbeispiel einer Rastvorrichtung für eine erfindungsgemässe Verstellvorrichtung im Bereich des Rotors;
Figur 16 einen Querschnitt durch ein Drehgleitelement mit innen glatter Stator- bzw. Rotorhülse für eine erfindungsgemässe Verstellvorrichtung; und
Figur 17 einen Querschnitt durch ein Drehgleitelement mit Drallnuten innen in der Stator- bzw. Rotorhülse für eine erfindungsgemässe Verstellvorrichtung.

### Ausführungsbeispiele

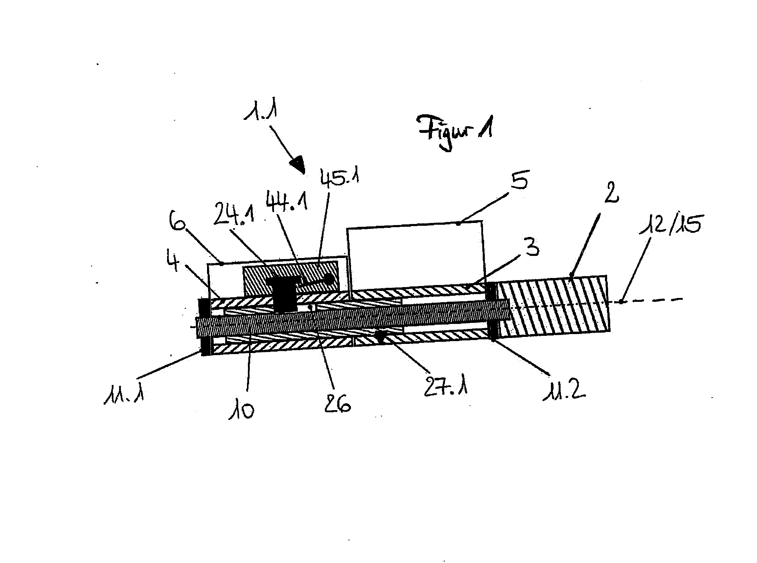

Gemäss Figur 1 ist eine Verstellvorrichtung 1.1 gezeigt. Diese Verstellvorrichtung 1.1 weist einen Motor 2, einen Stator 3 sowie einen Rotor 4 in einer gekapselten Bauweise auf. Dort ist ein Drehgleitelement 27.1 gezeigt. Daneben ist ein Drehgleitführungselement 24.1 und eine Drehgleitführungsnut 26 gezeigt.

Eine Spindelstange 10 ist einends durch eine Spindelmutter 11.2 mit dem Motor 2 verbunden und andernends in einer Spindelmutter 11.1 gelagert. Der Motor 2 treibt die Spindelstange 10 in den Spindelmuttern 11.1, 11.2 an. Die Spindelstange 10 steht in Wirkverbindung mit dem Drehgleitelement 27.1 und somit mit dem Stator 3 und dem Rotor 4. Die Spindelstange 10 dreht um eine Längs- bzw. Antriebsachse 12.

Der Stator 3 umfasst hierbei ein optional ortsfest montierbares Befestigungsteil 5 und der Rotor 4 ein bevorzugt um die Antriebsachse 12 beweglich angeordnetes Bauteil 6 sowie ein Lager 45.1. Das Bauteil 6 ist bevorzugt relativ zu dem Stator 3 und dem Befestigungsteil 6 beweglich und bildet mit diesem zusammen beispielsweise einen Beschlag. Das Lager 45.1 dient der Aufnahme des Drehgleitführungselementes 24.1 und einer diesem zugeordneten Schalteinrichtung 44.1.

Die Verstellvorrichtung 1.1 schwenkt mit Antrieb des Motors 2 das am Rotor 4 befestigte Bauteil 6 um einen definierten Winkelbereich, beispielsweise um plus minus 90 Grad. Die Verstellvorrichtung 1.1 wandelt dabei schnelle Motordrehungen um die Antriebsachse 12 in langsame Bewegungen einer Schwenkachse 15 um, wobei bauartbedingt die Antriebsachse 12 und die Schwenkachse 15 zumindest fast, vorliegend jedoch ganz zusammenfallen und meist identisch sind.

Der uniaxiale Aufbau dieser Verstellvorrichtung 1.1 erlaubt einen hermetisch dicht gekapselten und sehr kompakten Aufbau von Getriebe und Schwenkantrieb, die bei Bedarf in andere Baukomponenten integriert werden können.

Ferner ist die Verstellvorrichtung 1.1 mit der Schalteinrichtung 44.1 versehen, welche das Drehgleitführungselement 24.1 in Radialrichtung bewegt, um es in Formschluss und Kraftschluss mit der Drehgleitführungsnut 26 des Drehgleitelementes 27.1 zu bringen. Im Zustand aktiviert, d.h., das Drehgleitführungselement 24.1 ist in Form- und Kraftschluss mit der Drehgleitführungsnut 26, wird die Antriebskraft des Motors 2 über die Spindelstange 10 und das Drehgleitelement 27.1 auf den Rotor 4 übertragen und in Drehmoment und Winkelgeschwindigkeit transformiert. Im Zustand deaktiviert wird die Antriebskraft des Motors 2 nicht auf den Rotor 4 übertragen, da das Drehgleitführungselement 24.1 dann mit Hilfe der Schalteinrichtung 44.1 aus dem Eingriff mit der Drehgleitführungsnut 26 genommen ist. Das Drehgleitelement 27.1 liegt somit drehbar und verschiebbar in dem Rotor 4 bzw. dem Stator 3. Hierzu sind eine Innenwand, d.h. eine dem Drehgleitelement 27.1 zugewandten Seite des Rotors 4 bzw. des Stators 3, glattwandig ausgebildet.

Die Schalteinrichtung 44.1 verändert folglich - reversibel oder irreversibel - den Kraftschluss in der Kraftschlusskette zwischen dem Stator 3, dem Drehgleitelement 27.1 und dem Rotor 4.

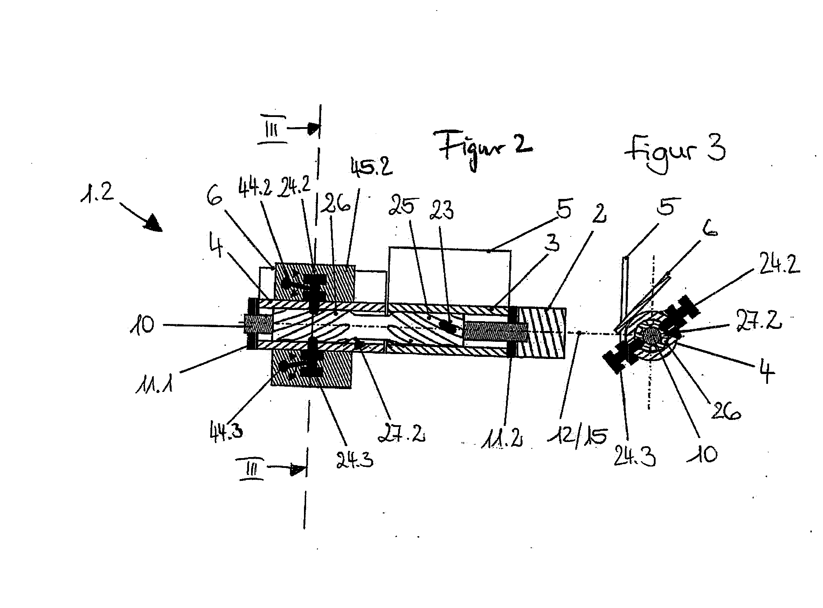

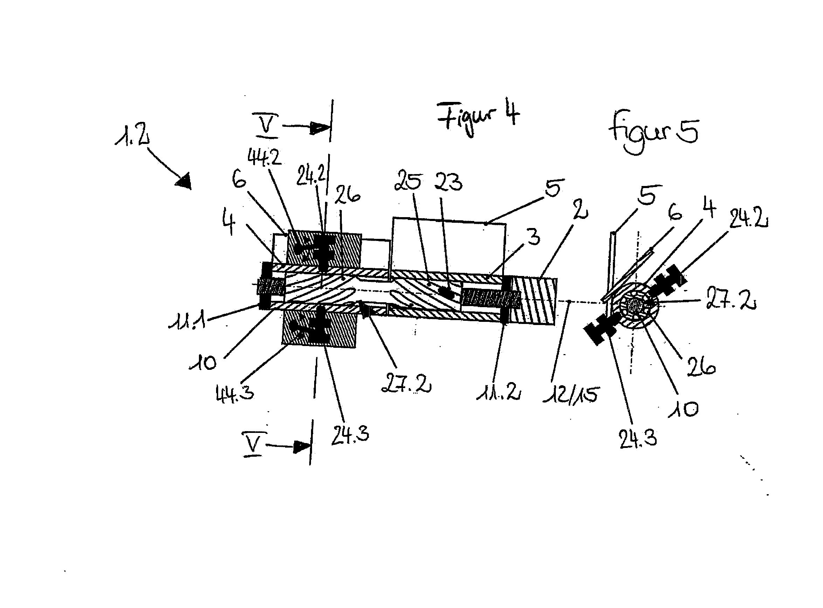

In den Figuren 2 bis 5 ist ein weiteres Ausführungsbeispiel einer erfindungsgemässen Verstellvorrichtung 1.2 in aktiviertem (siehe Figuren 2 und 3) bzw. in deaktiviertem (siehe Figuren 4 und 5) Zustand gezeigt. Neben den in Figur 1 bereits beschriebenen Merkmalen weist das hier gezeigte Drehgleitführungselement 27.2 ein weiteres Drehgleitführungselement 23 sowie zugehörige Drehgleitführungsnuten 25 auf. Ferner ist gegenüberliegend des Drehgleitführungselementes 24.2 ein weiteres Drehgleitelement 24.3 mit zugeordneter Schalteinrichtung 44.3 vorgesehen. Das Drehgleitelement 24.2 bzw. 24.3 und die Schalteinrichtung 44.2 bzw. 44.3 bilden zusammen einen Hebelmechanismus, welcher an dem Drehgleitführungselement 24.2 bzw. 24.3 angreift, um diesen in Radialrichtung anzuheben bzw. wieder in die Drehgleitführungsnuten 26 einzusenken. Eine Bewegung des Hebemechanismus erfolgt bevorzugt elektromagnetisch oder pneumatisch oder dergleichen. Ansonsten gelten die Ausführungen zu Figur 1 auch zu den Figuren 2 bis 5. Dies insbesondere dann, wenn die gleichen Merkmale mit den gleichen Bezugsziffern versehen wurden. Daher wird auf eine Wiederholung aller in Figur 1 beschriebenen Merkmale verzichtet.

Die Steigung der wendelförmig bzw. schraubenförmig verlaufenden Drehgleitführungsnuten 25 und 26 kann unterschiedlich sein.

Wird das Drehgleitelemente 27 axial entlang der Antriebs- bzw. Längsachse 12 bzw. der Spindelstange 10 verschoben, so bedeutet dies eine unterschiedliche Drehung des Stators 3 und des Rotors 4 um die Antriebs- bzw. Schwenkachse 12 bzw. 15. Folglich verdreht sich der Rotor 4 relativ zum Stator 3 um den Differenzwinkel der Drehgleitführungsnuten 25 und 26 zueinander bzw. voneinander weg. Wenn die beiden Drehgleitführungsnuten 25 und 26 gleichsinnig sind, aber unterschiedlich steigend verlaufen, ist es die Differenz der Winkel. Bei gegensinniger Drehrichtung der Drehgleitführungsnuten 25 und 26 ist es die Summe der Winkel.

Im Grunde können die Drehgleitführungsnuten 25 und 26 jede beliebige Form haben und auch durchgehend unregelmässig kurvig sein. Der Relativwinkel resultiert immer aus dem Differenzwinkel. Die Position des Drehgleitelementes 27 wird durch die Spindelstange 10 eingestellt bzw. durch den Motor 2, der die Spindelstange 10 um die Antriebs- bzw. Schwenkachse 12 bzw. 15 dreht und dabei das Drehgleitelement 27 entlang dieser Antriebs- bzw. Schwenkachse 12 bzw. 15 verschiebt.

In Figur 3 bzw. 5 ist nun eine an der Schnittlinie III - III aus Figur 2 bzw. V - V aus Figur 4 gezeigte Schnittansicht der Verstellvorrichtung 1.2 zu erkennen. Dort ist gezeigt, wie das Bauteil 6 zu dem Befestigungsteil 5 um die Antriebsachse 12 geschwenkt werden kann und wie die Drehgleitführungselemente 24.2 und 24.3 in die Drehgleitführungsnuten 26 eingreifen bzw. aus den Drehgleitführungsnuten 26 herausgezogen sind.

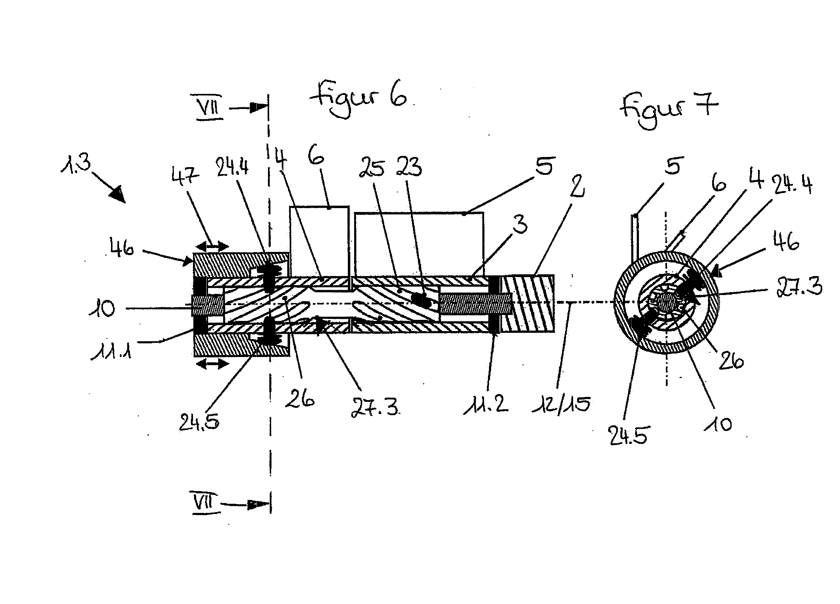

In den Figuren 6 und 7 ist ein weiteres Ausführungsbeispiel einer erfindungsgemässen Verstellvorrichtung 1.3 gezeigt. Neben den in den Figuren 1 bis 5 bereits beschriebenen Merkmalen weist die Verstellvorrichtung 1.3 einen Schiebekeilmechanismus 46 auf, welcher beispielsweise und wie vorliegend dargestellt, auf den Rotor 4 aufgesetzt und entlang eines Pfeils 47verschiebbar ist. Der Schiebekeilmechanismus 46 umfasst eine keilförmige Struktur, wobei die Keilrichtung axial orientiert ist. D.h. eine verengende oder lösende Keilwirkung auf die Drehgleitführungselemente 24.4 und 24.5 entsteht durch axiales Verschieben des Schiebekeilmechanismus 46. Eine Verschiebung nach rechts in der Figur verursacht somit eine Kraftauswirkung auf das gefedert gelagerte Drehgleitführungselement 24.4 bzw. 24.5. Dieses bewegt sich in die entsprechende Drehgleitführungsnut 26 des Drehgleitelementes 27.3.

Der Schiebekeilmechanismus 46 kann alternativ auch am Stator 3 angeordnet sein oder sogar an beiden. Entscheidend ist, dass am Drehgleitelement 27.3 mindestens eine freie Drehbarkeit um die Antriebs- bzw. Schwenkachse 12 bzw. 15 entsteht.

Ansonsten gelten die Ausführungen zu den Figuren 1 bis 5 auch zu den Figur 6 und 7. Dies insbesondere dann, wenn die gleichen Merkmale mit den gleichen Bezugsziffern versehen wurden. Daher wird auf eine Wiederholung aller in den obigen Figuren beschriebenen Merkmale verzichtet.

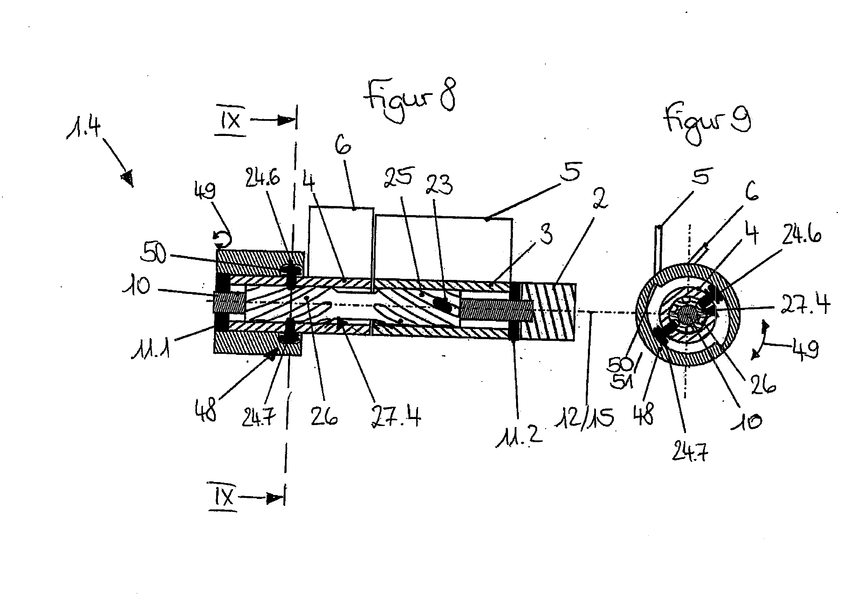

In den Figuren 8 und 9 ist ein weiteres Ausführungsbeispiel einer erfindungsgemässen Verstellvorrichtung 1.4 gezeigt. Neben den in den Figuren 1 bis 5 bereits beschriebenen Merkmalen weist die Verstellvorrichtung 1.4 einen Drehkeilmechanismus 48 auf, welcher beispielsweise und wie vorliegend dargestellt, auf den Rotor 4 aufgesetzt und um einen Pfeils 49 drehbar ist. Der Drehkeilmechanismus 48 umfasst Spiralkeilnuten 50, die in den Drehkeilmechanismus 48 integriert sind. Eine Drehung des Drehkeilmechanismus 48 führt zu einem Einsenken oder Ausheben der federnd gelagerten Drehgleitführungselemente 24.6 und 24.7 in die bzw. aus den Drehgleitführungsnuten 26. Eine Linksdrehung des Drehkeilmechanismus 48 von dem in Figur 8 gezeigten Zustand aus gegen den Uhrzeigersinn bis zu einem Anschlag 51 gibt die Drehgleitführungselemente 24.6 und 24.7 radial aus den Drehgleitführungsnuten 26 frei und bringt die Verstellvorrichtung 1.4 in den deaktivierten Zustand und umgekehrt.

Der Drehkeilmechanismus 48 kann alternativ auch am Stator 3 angeordnet sein oder sogar an beiden. Entscheidend ist, dass am Drehgleitelement 27.4 mindestens eine freie Drehbarkeit um die Antriebs- bzw. Schwenkachse 12 bzw. 15 entsteht.

Ansonsten gelten die Ausführungen zu den Figuren 1 bis 5 auch zu den Figur 8 und 9. Dies insbesondere dann, wenn die gleichen Merkmale mit den gleichen Bezugsziffern versehen wurden. Daher wird auf eine Wiederholung aller in den obigen Figuren beschriebenen Merkmale verzichtet.

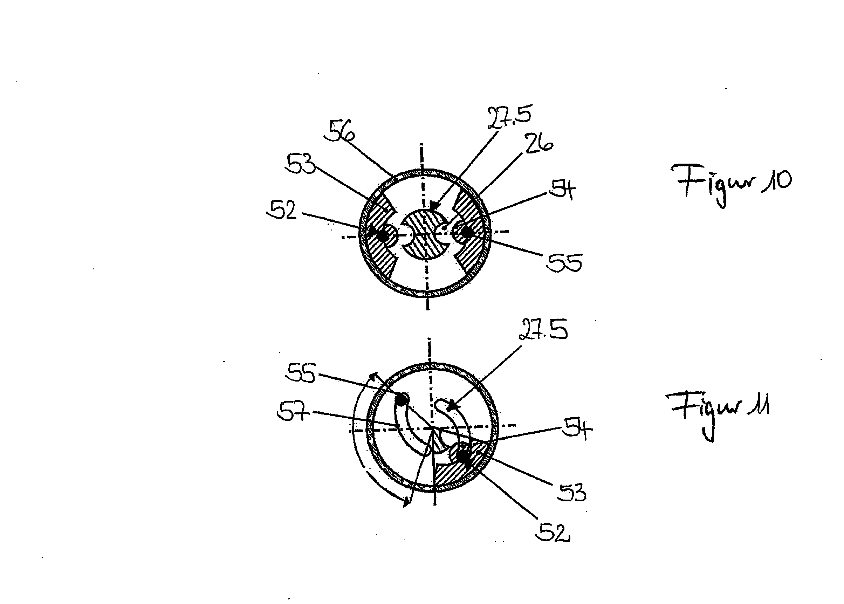

Die Figuren 10 und 11 zeigen jeweils einen Querschnitt durch eine Rastvorrichtung 52 zur Verwendung in einer Verstellvorrichtung bzw. dem Drehgleitelement 27.5. Die Rastvorrichtung 52, von der bevorzugt mehr als eine vorgesehen ist, umfasst Rastelemente 54 und Führungselemente 55. Die Rastelemente 54 werden über einen nicht näher gezeigten Schaltmechanismus radial auf die Drehgleitführungsnuten 26 des Drehgleitelementes 27.5 zu bewegt und kommen dabei in Kraftschluss mit diesen. Die Rastelemente 54 greifen formschlüssig in die Drehgleitführungsnuten 26 in dem Drehgleitelement 27.5 ein. Zur besseren Führung der Rastvorrichtung 52 werden die Führungselemente 55 und damit die Rastelemente 54 durch eine Schaltscheibe 56 bewegt, in welcher Führungsnuten 57 spiralförmig zulaufen angeordnet sind.

Anstelle des bisher beschriebenen Rotors ist hier der Rotor aufgespalten, so dass keine Hülse und kein Rohr mehr existiert. Stattdessen sind Rotorlamellen 53 vorgesehen, welche die Rastvorrichtung 53 umfassen.

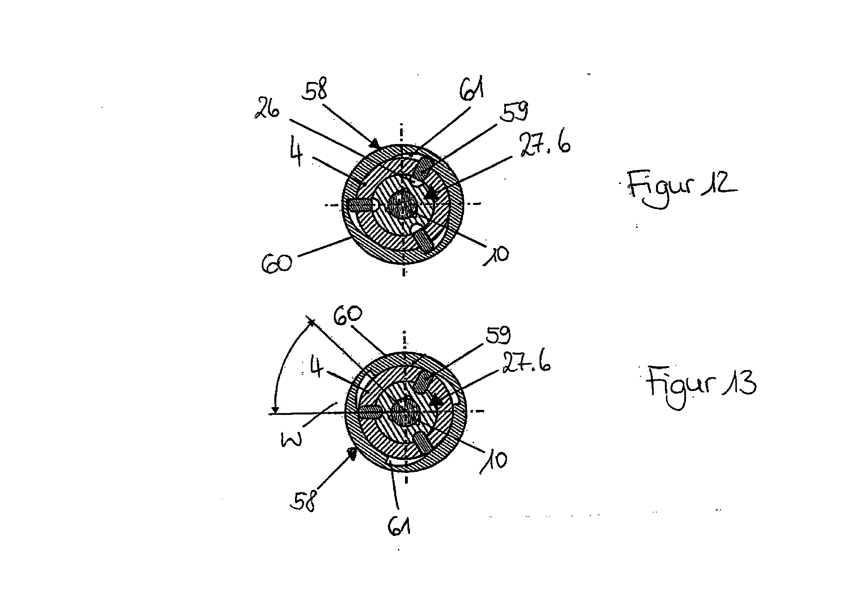

Die Figuren 12 und 13 zeigen jeweils einen Querschnitt durch ein weiteres Ausführungsbeispiel einer Rastvorrichtung 58 für eine erfindungsgemässe Verstellvorrichtung in deaktiviertem (siehe Figur 12) und in aktiviertem (siehe Figur 13) Zustand. Hier umfasst die Rastvorrichtung 58 radial wirkende Rastbolzen 59. Bevorzugt sind mehrere der Rastbolzen 59 vorgesehen, möglich ist jedoch auch die Anordnung eines einzelnen Rastbolzen. Weiterhin umfasst die Rastvorrichtung 58 einen Schaltring 60 um den Rotor 4 herum, welcher mit Rastnuten 61 versehen ist. Die Rastnuten 61 können mit den Rastbolzen 59 in Wirkverbindung treten. Daher ist bevorzugt die Anzahl der Rastnuten 61 der Anzahl der Rastbolzen 59 angepasst.

Die Rastbolzen 59 wiederum gelangen mit ihrer dem Schaltring 60 gegenüberliegenden Seite mit den Drehgleitführungsnuten 26 des Drehgleitelementes 27.6 in Wirkverbindung sobald der Schaltring 60 im Uhrzeigersinn gedreht wird. In aktiviertem Zustand sind die Rastbolzen 59 in die Drehgleitführungsnuten 26 eingefahren. In deaktiviertem Zustand befinden sich die Rastbolzen 59 aus dem Eingriff mit den Drehgleitführungsnuten 26 des Drehgleitelementes 27.6.

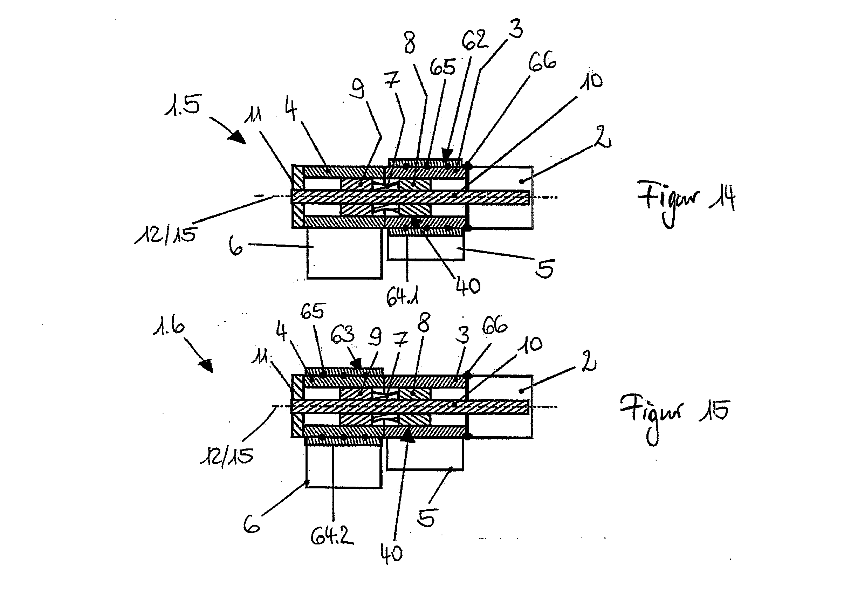

Ein Schaltvorgang durch Verdrehen des Schaltringes 60 zu Erzeugung des aktivierten bzw. deaktivierten Zustandes erfolgt um einen Winkel w. In den Figuren 14 und 15 wiederum ist eine Schnittansicht durch eine statorseitige Kugelrastvorrichtung 62 bzw. eine rotorseitige Kugelrastvorrichtung 63 für eine Verstellvorrichtung 1.5 gezeigt. Im Gegensatz zu den oben bereits beschriebenen Verstellvorrichtungen 1.1 bis 1.4 weist das Drehgleitelement 40 der Verstellvorrichtung 1.5 zumindest zwei gegenläufigen Drehgleitgewinde 8 und 9 auf, die über einen festen Verbinder 7 miteinander verbunden sind und den Stator 3 mit dem Rotor 4 verbinden. Die Drehgleitgewinde 8 und 9 stehen über ein Aussengewinde mit einem Innengewinde in einer Hülse des Stators 3 und des Rotors 4 in Wirkverbindung. Über die Spindelstange 10, welche mit dem Motor 2 verbunden ist, werden die Drehgleitgewinde 8 und 9 angetrieben und bewegt, wodurch sich über die Wirkverbindung auch der Stator 3 und der Rotor 4 drehen und so ein Verschwenken beispielsweise des Bauteils 6 erfolgen kann.

Hinsichtlich der weiteren Merkmale wird auf die Ausführung insbesondere zu den Figuren 1 bis 5 verwiesen, mit dem Unterschied, dass das im Falle der statorseitigen Kugelrastvorrichtung 62 das Befestigungselement 5 stabil mit einer Rasthülse 64.1 verbunden ist. Im Falle der rotorseitigen Kugelrastvorrichtung 63 ist das Bauteil 6 mit der Rasthülse 64.2 verbunden. Durch eine das Drehmoment begrenzende Rastfunktion wird eine Überlastung des Getriebes oder eine Beschädigung bzw. Verletzung reversibel vermieden.

Beide Kugelrastvorrichtungen 62 und 63 weisen ferner Rastkugeln 65 auf, welche den Stator 3 bzw. den Rotor 4 umgeben. Bei doch stattfindender Überlastung dreht das das Getriebe an der Rasthülse 64.1 am Stator 3 bzw. an der Rasthülse 64.2 am Rotor 4 durch.

Eine Sollbruchstelle 66 gegen Überlastung ist ebenfalls vorgesehen bevorzugt zwischen dem Motor 2 und dem Stator 3.

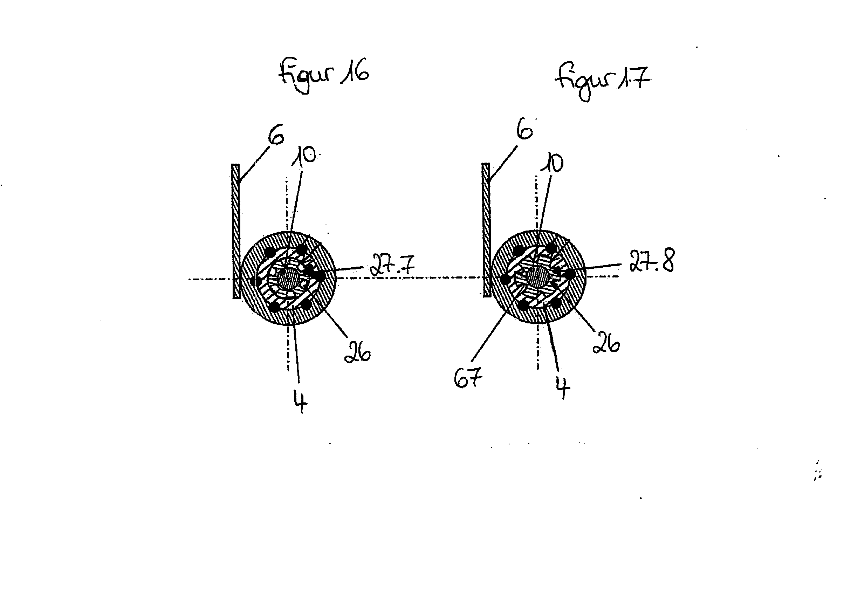

Figur 16 zeigt einen Querschnitt durch ein Drehgleitelement 27.7, wobei das Drehelement 27.7 in dem Rotor 4 und dem Stator 3 gelagert ist, welche eine glatte Innenseite aufweisen, d.h. die Seite, die dem Drehgleitelement 27.7 zugewandt ist, ist glatt ausgebildet. Für die Drehung zwischen Drehgleitelement 27.7 und dem Rotor 4 bzw. dem Stator 3 ist es erforderlich, dass die Innenseite glatt ausgebildet ist. Auf den Rotor 4 ist eine der oben beschriebenen Rastvorrichtungen in Form eines Schaltrings mit Rastkugeln aufgesetzt. An dieser Stelle wird auf die obige Ausführung verwiesen.

Figur 17 zeigt einen Querschnitt durch ein Drehgleitelement 27.8 mit Drallnuten 67 auf der Innenseite des Stators 3 bzw. des Rotors 4. Diese Anordnung verhindert eine Drehung des Drehgleitelementes 27.8 innerhalb des Rotors 4 und des Stators 3. Auf den Rotor 4 ist eine der oben beschriebenen Rastvorrichtungen in Form eines Schaltrings mit Rastkugeln aufgesetzt. An dieser Stelle wird auf die obige Ausführung verwiesen.

**Bezugszeichenliste**

| | | | | | |
|---|---|---|---|---|---|
| 1 | Verstellvorrichtung | 34 | | 67 | Drallnut |
| 2 | Motor | 35 | | 68 | |
| 3 | Stator | 36 | | 69 | |
| 4 | Rotor | 37 | | 70 | |
| 5 | Befestigungselement | 38 | | 71 | |
| 6 | Bauteil | 39 | | 72 | |
| 7 | Verbinder | 40 | Drehgleitelement | 73 | |
| 8 | Drehgleitgewinde | 41 | | 74 | |
| 9 | Drehgleitgewinde | 42 | | 75 | |
| 10 | Spindelstange | 43 | | 76 | |
| 11 | Spindelmutter | 44 | Schalteinrichtung | 77 | |
| 12 | Antriebsachse | 45 | Lager | 78 | |
| 13 | | 46 | Schiebekeilmechanismus | 79 | |
| 14 | | 47 | Pfeil | | |
| 15 | Schwenkachse | 48 | Drehkeilmechanismus | | |
| 16 | Stabildichtung | 49 | Pfeil | | |
| 17 | Dichtungselement | 50 | Spiralkeilnuten | | |
| 18 | | 51 | Anschlag | w | Winkel |
| 19 | | 52 | Rastvorrichtung | | |
| 20 | | 53 | Rotorlamelle | | |
| 21 | | 54 | Rastelement | | |
| 22 | | 55 | Führungselement | | |
| 23 | Drehgleitführungselem. | 56 | Schaltscheibe | | |
| 24 | Drehgleitführungselem. | 57 | Führungsnut | | |
| 25 | Drehgleitführungsnut | 58 | Rastvorrichtung | | |
| 26 | Drehgleitführungsnut | 59 | Rastbolzen | | |
| 27 | Drehgleitelement | 60 | Schaltring | | |
| 28 | | 61 | Rastnut | | |
| 29 | | 62 | statorseitige Kugelrastvorr. | | |
| 30 | | 63 | rotorseitige Kugelrastvorr. | | |
| 31 | | 64 | Rasthülse | | |
| 32 | | 65 | Rastkugel | | |
| 33 | | 66 | Sollbruchstelle | | |

## Patentansprüche

1. Verstellvorrichtung mit einem Motor (2), einem Stator (3) und einem Rotor (4) sowie einem zwischen dem Stator (3) und dem Rotor (4) angeordneten Drehgleitelement (27.1, 27.2),
**dadurch gekennzeichnet,**
**dass** das Drehgleitelement (27.1, 27.2) im Bereich des Rotors (4) und/oder des Stators (5) aktivierbar ist.

2. Verstellvorrichtung nach Anspruch 1, **dadurch gekennzeichnet, dass** die Aktivierung über eine Schalteinrichtung (44) erfolgt.

3. Verstellvorrichtung nach Anspruch 1, **dadurch gekennzeichnet, dass** die Aktivierung über eine Wirkverbindung einer Rastkugel (65) mit einer Rasthülse (64) erfolgt.

4. Verstellvorrichtung nach Anspruch 1 oder 2, **dadurch gekennzeichnet, dass** die Aktivierung durch Einbringen eines Drehgleitführungselements (23, 24) in eine Drehgleitführungsnut (25, 26) des Drehgleitelements (27) erfolgt.

5. Verstellvorrichtung nach einem der Ansprüche 1 bis 4, **dadurch gekennzeichnet, dass** der Motor (2), der Stator (3), der Rotor (4) und das Drehgleitelement (27.1, 27.2) uniaxial angeordnet sind.

6. Verstellvorrichtung nach einem der Ansprüche 1 bis 5, **dadurch gekennzeichnet, dass** eine Spindelstange (10) zur Übertragung der Antriebskraft von dem Motor (2) auf das Drehgleitelement (27.1, 27.2) vorgesehen ist.

7. Verstellvorrichtung nach wenigstens einem der Ansprüche 1 bis 6, **dadurch gekennzeichnet, dass** das Drehgleitelement (27.1, 27.2) zumindest das ein Drehgleitführungselement (23, 24) umfasst, welches auf einer dem Drehgleitelement (27.1, 27.2) zugewandten Innenseite des Stators (3) und/oder Rotors (4) angeordnet ist.

8. Verstellvorrichtung nach Anspruch 7, **dadurch gekennzeichnet, dass** das Drehgleitführungselement (23, 24) in zumindest der einen Drehgleitführungsnut (25, 26) geführt ist, welche auf einer der Innenseite des Stators (3) und/oder Rotors (4) zugewandten Oberfläche des Drehgleitelementes (27.1, 27.2) eingebracht ist.
